# EUROPEAN PATENT APPLICATION

(11) **EP 4 654 566 A1**
(43) Date of publication of application: **26.11.2025**
(21) Application number: 24838299.6
(22) Date of filing: 28.02.2024
(51) Int. Cl.: H04M 1/72433, G10L 15/28

(54) **SPEECH-TO-TEXT CONVERSION METHOD, ELECTRONIC DEVICE AND READABLE STORAGE MEDIUM**

(30) Priority: 07.07.2023 CN 202310840819
(71) Applicant: Honor Device Co., Ltd., Shenzhen, Guangdong 518040 (CN)
(72) Inventor: FAN, Xiaojin, Shenzhen, Guangdong 518040 (CN)
(74) Representative: Goddar, Heinz J.
(86) International application number: PCT/CN2024/079041
(87) International publication number: WO 2025/011038

(57) **Abstract**

This application provides a voice-to-text conversion method, an electronic device, and a readable storage medium, and belongs to the field of electronic technologies. The method includes: displaying an input box in a first interface of a first application in response to a first operation, where a breath wakeup function of the electronic device is in an enabled state; in response to the display of the input box, setting a second application to which the input box belongs to have a highest priority for using the breath wakeup function, where the breath wakeup function triggers the second application with the highest priority to continuously receive voice data when a user moves the electronic device and receives breath of the user; in response to that the user moves the electronic device and the breath of the user is detected, continuously receiving, by the second application of the electronic device, the voice data and converting the voice data to text; and displaying the converted text in the first interface. According to the voice-to-text conversion method in embodiments of this application, an operation is simple, natural and smooth, and is applicable to a scenario of one-hand operation, which can greatly improve user experience.

## Description

This application claims priority to Chinese Patent Application No. 202310840819.8, filed with the China National Intellectual Property Administration on July 7, 2023 and entitled "VOICE-TO-TEXT CONVERSION METHOD, ELECTRONIC DEVICE, AND READABLE STORAGE MEDIUM", which is incorporated herein by reference in its entirety.

### TECHNICAL FIELD

This application relates to the field of electronic technologies, and in particular, to a voice-to-text conversion method, an electronic device, and a readable storage medium.

### BACKGROUND

With development of computer technologies, a voice recognition technology is increasingly favored by people. During human-computer interaction, people conveniently and quickly express their meanings to an electronic device in a voice input manner. Therefore, more and more voice recognition technologies are applied to various applications. For example, in a social chat scenario, text input is currently the most frequent scenario, and voice-to-text conversion is a text input manner secondary only to pinyin input.

Currently, during voice-to-text conversion, a voice-to-text conversion button needs to be long-pressed on an input panel of an application, to complete input of the voice-to-text conversion. However, in some scenarios, for example, a scenario in which a mobile phone is held with one hand, when the input method panel is popped up, a user cannot reach with a thumb or cannot conveniently press the voice-to-text conversion button for a long time.

### SUMMARY

In view of this, the present invention provides a voice-to-text conversion method, an electronic device, and a readable storage medium. The method is applicable to a scenario with one-hand operations, and can greatly improve user experience.

Some implementations of this application provide a voice-to-text conversion method. This application is described below from a plurality of aspects. Mutual reference may be made to implementations and beneficial effects of the following plurality of aspects.

According to a first aspect, the present invention provides a voice-to-text conversion method, and the method may be applied to an electronic device. The method includes:

displaying an input box in a first interface of a first application in response to a first operation, where a breath wakeup function of the electronic device is in an enabled state; in response to the display of the input box, setting a second application to which the input box belongs to have a highest priority for using the breath wakeup function, where the breath wakeup function triggers the second application with the highest priority to continuously receive voice data when a user moves the electronic device and receives breath of the user; in response to that the user moves the electronic device and the breath of the user is detected, continuously receiving, by the second application of the electronic device, the voice data and converting the voice data to text; and displaying, by the electronic device, the converted text in the first interface.

According to the voice-to-text conversion method in embodiments of this application, in a process of triggering voice input, the voice input can be naturally completed without a need for the user to press an input voice function key or tap a function key. Such an input manner has simple, natural, and smooth operations, is applicable to a scenario with one-hand operations, and can greatly improve user experience.

In an embodiment of the first aspect, the first application is a note application, and the first operation is an operation of creating a new note or an editing operation acting on a note detail page. It is confirmed through the operation that the user intends to input information, and the operation is used as a trigger condition for setting a priority and has an action that is regular and natural.

In an embodiment of the first aspect, the first application is an instant messaging application, and the first operation is an operation acting on a dialog interface of the instant messaging application. It is confirmed through the operation that the user intends to input information, and the operation is used as a trigger condition for setting a priority and has an action that is regular and natural.

In an embodiment of the first aspect, the in response to that the user moves the electronic device and the breath of the user is detected, continuously receiving, by the second application of the electronic device, the voice data and converting the voice data to text includes: when it is detected that movement acceleration of the electronic device reaches a preset value and the breath of the user is detected through the breath wakeup function, continuously receiving, by the second application of the electronic device, the voice data and converting the voice data to text.

In an embodiment of the first aspect, the setting a second application to which the input box belongs to have a highest priority for using the breath wakeup function includes: registering a callback event of the second application for the breath wakeup function in a registration list, and setting a callback priority corresponding to the second application to the highest priority. By setting the priority, it can be ensured that the obtained voice data is sent to the second application, and is recorded in a form of the registration list, to facilitate query, and quickly confirm a registrant with the highest priority.

In an embodiment of the first aspect, the method further includes: canceling, by the electronic device in response to a third operation, the highest priority of the second application for using the breath wakeup function, and no longer sending the voice data to the second application when receiving the voice data, so that when voice input of the first application is not used, the electronic device no longer transmits, to the first application, a voice flow obtained through a breath wakeup algorithm.

In an embodiment of the first aspect, the third operation includes: an operation of closing the input box; or an operation of quitting a running interface of the second application from a current interface.

In an embodiment of the first aspect, the highest priority is restored to a third application after the highest priority of the second application for using the breath wakeup function is canceled. The third application of the electronic device continuously receives voice data in response to that the user moves the electronic device and the breath of the user is detected, so that when the user does not use voice-to-text conversion, the electronic device may quickly restore a priority of the third application, for example, restore a priority of a voice assistant application. In this way, when the second application and the third application use the breath wakeup function, seamless switching is implemented, and usage is more comfortable for the user.

In an embodiment of the first aspect, the third application is a voice assistant application.

According to a second aspect, this application further provides an electronic device, including: a memory, configured to store instructions executed by one or more processors of a device, and a processor, configured to execute instructions, to enable the electronic device to perform any one of the methods in technical solutions of the first aspect.

According to a third aspect, this application further provides a computer-readable storage medium, where the computer-readable storage medium stores a computer program, and when the computer program is run by a processor, the processor is enabled to perform any one of the methods in technical solutions of the first aspect.

According to a fourth aspect, this application further provides a chip structure, including at least one chip, where the at least one chip is configured to perform any one of methods in technical solutions of the first aspect.

According to a fifth aspect, this application further provides a computer program product including instructions, where when the computer program product runs on an electronic device, a processor is enabled to perform any one of the methods in technical solutions of the first aspect.

### BRIEF DESCRIPTION OF DRAWINGS

FIG. 1A, FIG. 1B, and FIG. 1C are schematic diagrams of interface operations during voice interaction between a user and a mobile phone according to some embodiments;
FIG. 2 is a scenario diagram of a user operating a mobile phone with one hand according to some embodiments;
FIG. 3A(1) and FIG. 3A(2) are diagrams of an operation interface for enabling a breath wakeup function for a first time by a user according to an embodiment of this application;
FIG. 3B(1), FIG. 3B(2), FIG. 3B(3), and FIG. 3B(4) are schematic diagrams of an interface of voice interaction between a user and an electronic device according to an embodiment of this application;
FIG. 4 is a schematic structural diagram of an electronic device according to an embodiment of this application;
FIG. 5 is a block diagram of a software structure of an electronic device according to an embodiment of this application;
FIG. 6 is a schematic diagram of a data flow direction of a voice-to-text conversion method in a software framework of an electronic device according to an embodiment of this application;
FIG. 7 is another schematic diagram of a data flow direction of a voice-to-text conversion method in a software framework of an electronic device according to another embodiment of this application;
FIG. 8 is a flowchart of a voice-to-text conversion method according to an embodiment of this application;
FIG. 9A and FIG. 9B are diagrams of an operation interface for enabling a breath wakeup function through settings according to an embodiment of this application;
FIG. 10 is a schematic diagram of an interface during voice input according to an embodiment of this application;
FIG. 11A, FIG. 11B, and FIG. 11C are schematic diagrams of an operation interface corresponding to opening a chat application in a mobile phone according to an embodiment of this application;
FIG. 12 is a flowchart of interaction between modules of executing a voice-to-text conversion method in a mobile phone according to an embodiment of this application; and
FIG. 13 is a block diagram of a system on chip according to some embodiments of this application.

### DESCRIPTION OF EMBODIMENTS

The following clearly and completely describes technical solutions in embodiments of this application with reference to the accompanying drawings in embodiments of this application.

To facilitate understanding of the technical solutions of this application, technical problems to be resolved in this application are first described.

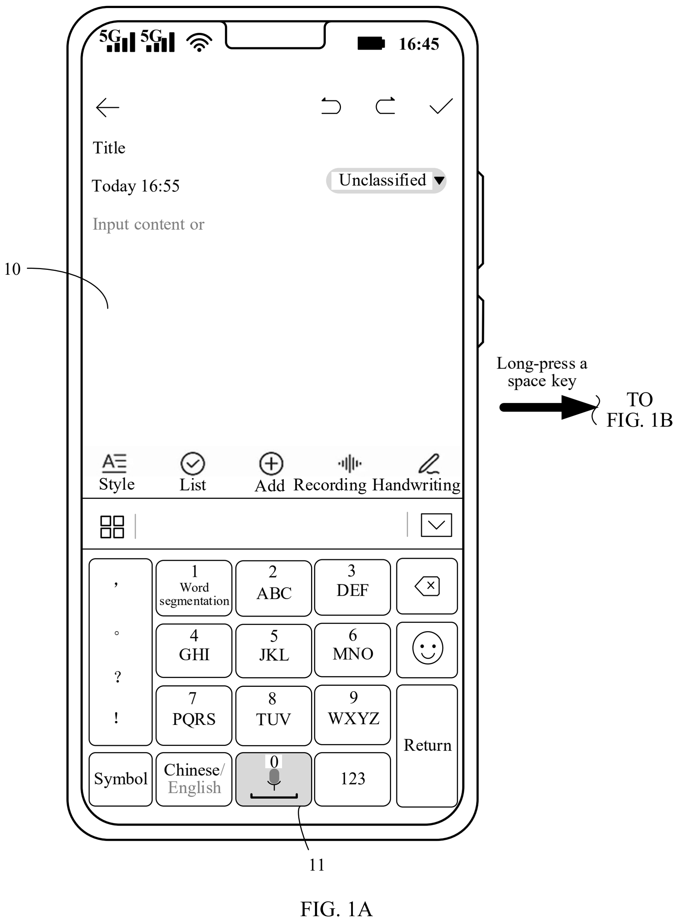

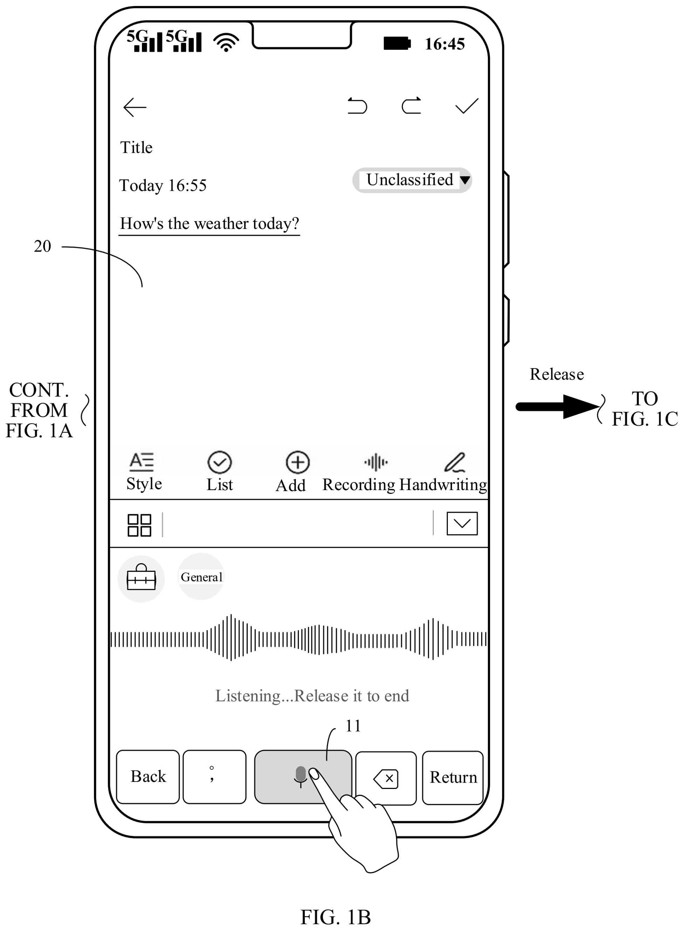

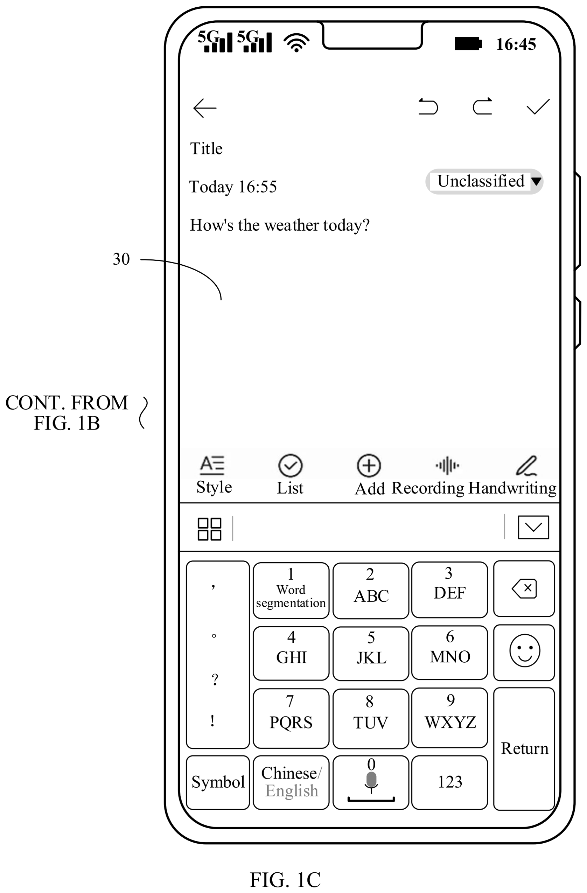

FIG. 1 A, FIG. 1B, and FIG. 1C are schematic diagrams of interface operations during voice interaction between a user and a mobile phone according to some embodiments. FIG. 1A, FIG. 1B, and FIG. 1C show a scenario in which the user uses the mobile phone for interaction. When the user intends to input text in a voice-to-text conversion manner, the user needs to open a corresponding application, for example, open an input interface 10 of an application shown in FIG. 1A. In the interface 10, the user may choose to handwrite, or long-press a control 11, to enable the mobile phone to recognize a voice of the user through a voice recognition technology and convert the voice into text. In response to a tapping operation of the user on the control 11, as shown in FIG. 1B, in the interface 20, the user long-presses the control 11 (a voice input key), and says "How's the weather today". The mobile phone recognizes the voice of the user, converts the voice into the text, and displays the text in the interface. If the user ends input, the user may release the pressing of the control 11. As shown in FIG. 1C, the user releases the control 11, the mobile phone determines that the user input ends, converts a corresponding voice into text, and restores an input panel (an input box) to an original input state, so that the user reselects an input manner. In such a voice-to-text manner, the user does not input through handwriting any longer, and has an input manner that is more convenient and fast.

However, in the foregoing manner, the user still needs to long-press the control 11. In some scenarios, because the user operates the mobile phone with one hand, it is not suitable to press the control 11 for a long time, causing the operation to be inconvenient.

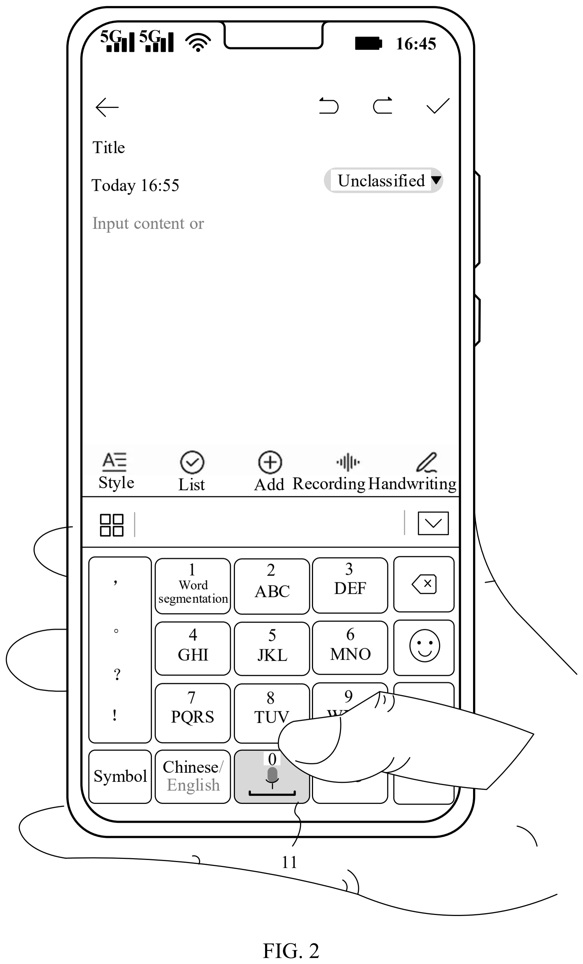

FIG. 2 is a scenario diagram of a user operating a mobile phone with one hand according to some embodiments. As shown in FIG. 2, when the user operates the mobile phone with one hand, for example, the user carries a bag with one hand, and operates the mobile phone with the other hand, if the user intends to use a voice-to-text manner, the user not only needs to hold up the mobile phone with one hand, but also needs to press the control 11 with a thumb, and then performs voice input. In such a one-hand operation case, for an electronic device having a large mobile phone screen, in the operation shown in FIG. 2, the control 11 is not easily touched by the thumb. Even if being touched, the control 11 needs to be pressed by the thumb for a long time, and sometimes an insufficient pressing force, sliding off, or the like causes the user to passively ends a segment of voice, reducing use experience of the user.

In addition, sometimes the user prefers more natural and smooth interaction with the mobile phone, and the user can achieve voice-to-text conversion without intending to consciously press or tap a voice input button during input. Therefore, a current voice-to-text manner cannot satisfy user requirements.

Based on the foregoing existing problems, this application provides a voice-to-text conversion method. When the breath wakeup function of the electronic device is enabled, the user does not need to manually press the voice input button in the input interface of the application, and much less needs to press the voice input button for a long time. Instead, even in a one-hand operation case, voice-to-text conversion can also be triggered by a common natural action, to facilitate the user to quickly achieve the voice-to-text conversion. In addition, a requirement of the user for a natural operation of an action can be satisfied, better improving user experience.

It should be noted that, the breath wakeup function in embodiments of this application is an algorithm that not only can obtain data about the user moving the electronic device, but also can obtain breath of the user. After the breath wakeup function is enabled, if the user performs an operation on the mobile phone, for example, lifts up the mobile phone and inputs a voice, the breath wakeup function recognizes the operation of the user, and may continuously obtain the voice of the user.

The following describes a voice-to-text conversion method in embodiments of this application with reference to the accompanying drawings.

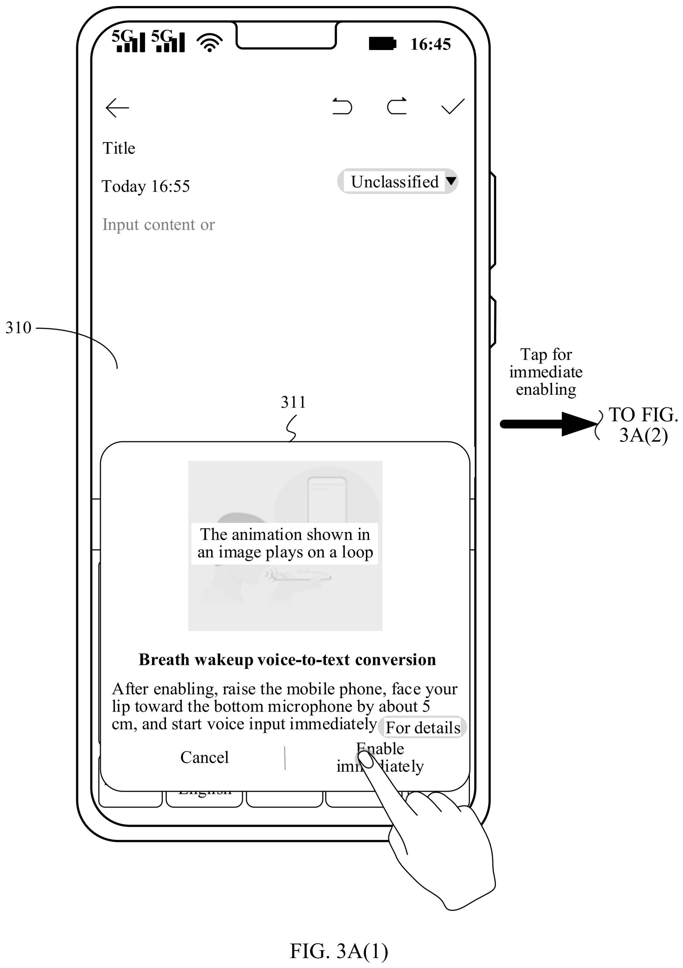

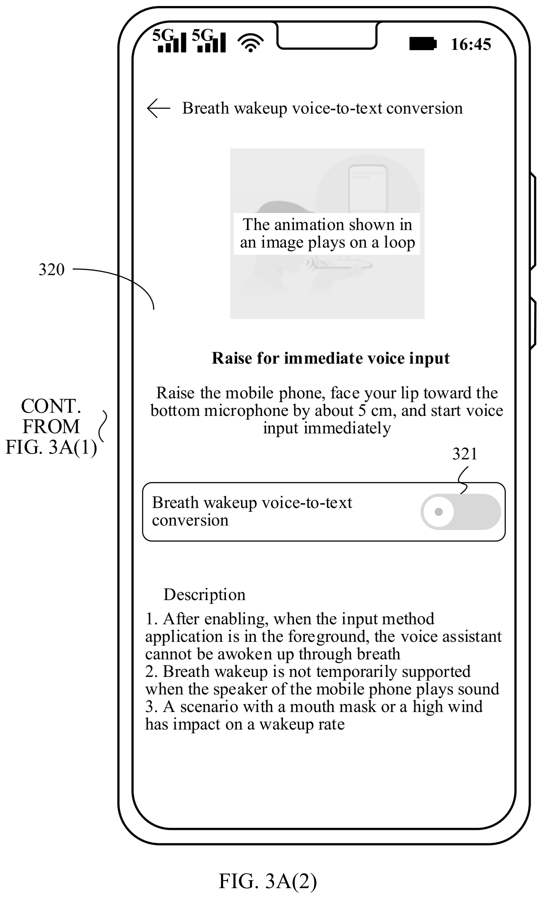

In embodiments of this application, when being configured to implement voice-to-text conversion by using the mobile phone, a breath wakeup function may be enabled in advance. For example, when the user uses the mobile phone for a first time, the user enables the breath wakeup function in a setting function of the application. For an operation interface for the user to enable the breath wakeup function, refer to an operation interface shown in FIG. 3A(1) and FIG. 3A(2).

FIG. 3A(1) and FIG. 3A(2) are diagrams of an operation interface for enabling a breath wakeup function for a first time by a user according to an embodiment of this application. As shown in FIG. 3A(1), when the user uses the mobile phone for the first time, or uses an input method application for the first time, a guidance box 311 is automatically displayed in an input method application interface 310. For example, a related prompt for prompting the user to use breath wakeup voice-to-text conversion is "After enabling, raise the mobile phone, face your lip toward the bottom microphone by about 5 cm, and start voice input immediately." The prompt also includes corresponding options of "Cancel" and "Enable immediately". When the user taps "Enable immediately", an interface for enabling the function corresponding to "Breath wakeup voice-to-text conversion" (the breath wakeup function) is displayed. The user may enable the breath wakeup function through an enabler 321. After the foregoing breath wakeup function is enabled, the user may perform an operation of voice-to-text conversion at any time according to a requirement of the user.

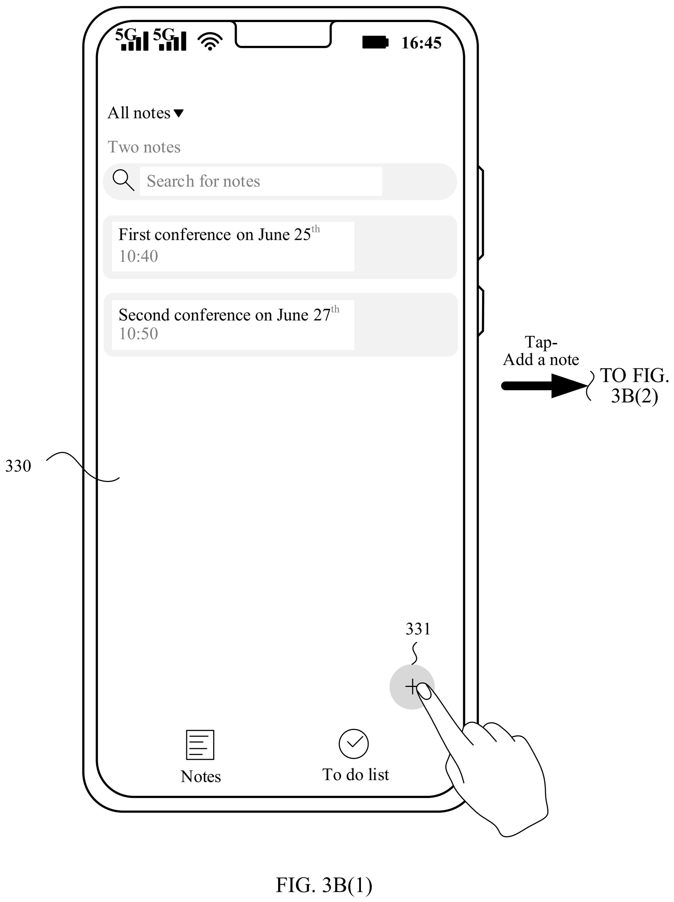

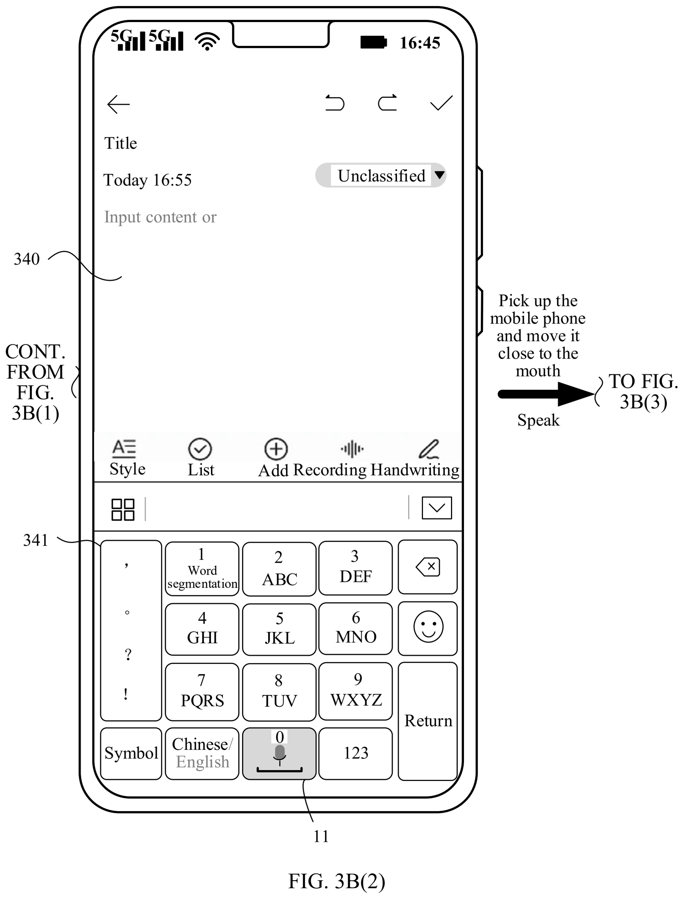

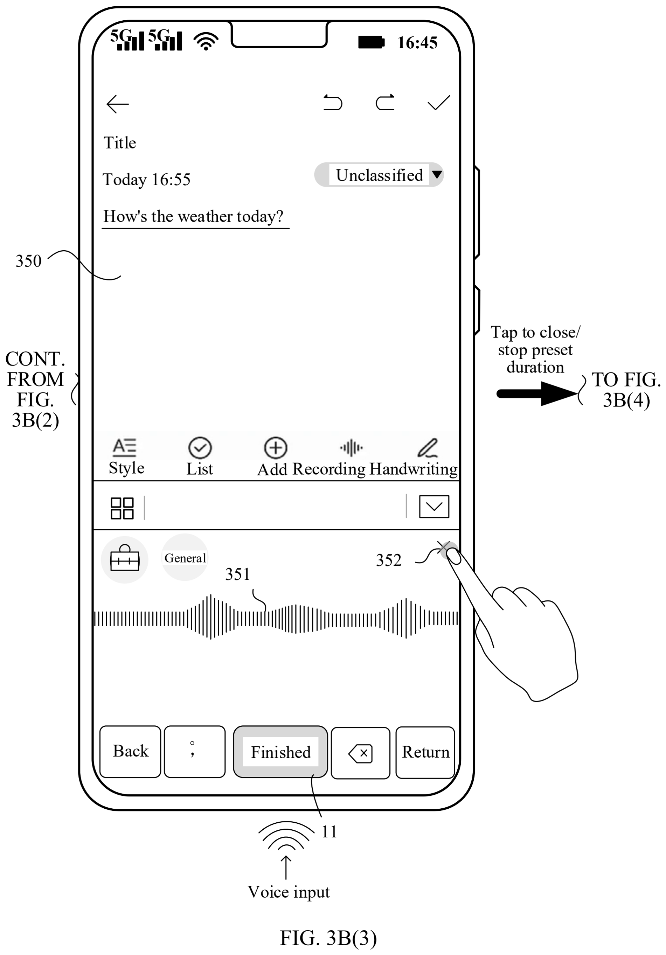

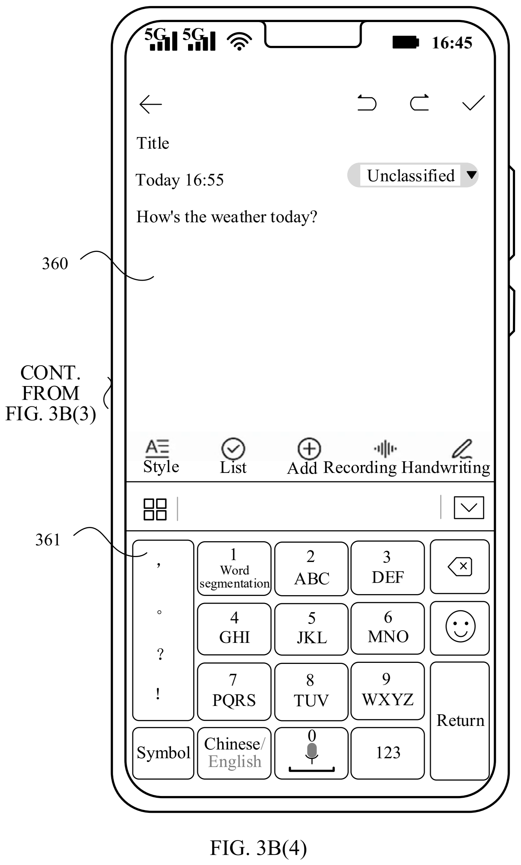

FIG. 3B(1), FIG. 3B(2), FIG. 3B(3), and FIG. 3B(4) are schematic diagrams of an interface of voice interaction between a user and a mobile phone according to an embodiment of this application. As shown in FIG. 3B(1), a note application is open, and a note title interface 310 is displayed. Because the user already enables the breath wakeup function, the user does not need to manually enable the breath wakeup function. When the user intends to create a new note, the user may tap a new control 331 in an interface 330 (a first operation). The mobile phone receives a tapping operation of the user on the control 331, and in response to a tapping operation on the interface 330, the mobile phone displays an interface 340 (a first interface) shown in FIG. 3B(2). The mobile phone displays an input box 341 in the interface 340, so that the user enters information in the interface 340 of a first application at any time. When the user picks up the mobile phone, moves it close to the mouth, and speaks, the mobile phone receives this operation, and in response to the operation, displays an interface 350 shown in FIG. 3B(3). The mobile phone converts a received voice into text and displays the text in the interface 350, for example, "How's the weather today". In addition, when the user inputs the voice, controls of letters or symbols in the input box 341 in the interface 340 disappear, and are correspondingly displayed as an amplitude 351 representing an audio. When the user taps a close control 352, or voice input is not performed within 5 seconds, an input box 361 shown in FIG. 3B(4) may be restored to an original state, that is, the controls of letters, symbols, or the like are redisplayed in the input box 341 shown in FIG. 3B(2).

In an operation process described in FIG. 3B(1), FIG. 3B(2), FIG. 3B(3), and FIG. 3B(4), when the user intends to input in the voice-to-text conversion manner, the user only needs to pick up the mobile phone and speak after an input panel is popped up, so that the voice-to-text conversion function is triggered. The user does not need to press an input voice function key, tap a voice function key, or the like, so that the voice input can be naturally completed. The operation is simple, natural and smooth, and is applicable to a scenario of a one-hand operation, which can greatly improve user experience.

In the foregoing embodiments, an example in which the mobile phone is used as the electronic device is used for description. In some embodiments, the electronic device may alternatively be a product having a display interface, like a tablet computer, an e-reader, a remote controller, a personal computer (personal computer, PC), a notebook computer, a personal digital assistant (personal digital assistant, PDA), an vehicle-mounted device, a network television, a wearable device, or a television, or a smart display wearable product like a smart watch or a smart wristband. A form of the foregoing electronic device is not specially limited in embodiments of this application. For ease of description, the following embodiments are all described by using an example in which the electronic device is a mobile phone.

The following describes the voice-to-text conversion method in embodiments of this application with reference to a specific structure of the electronic device.

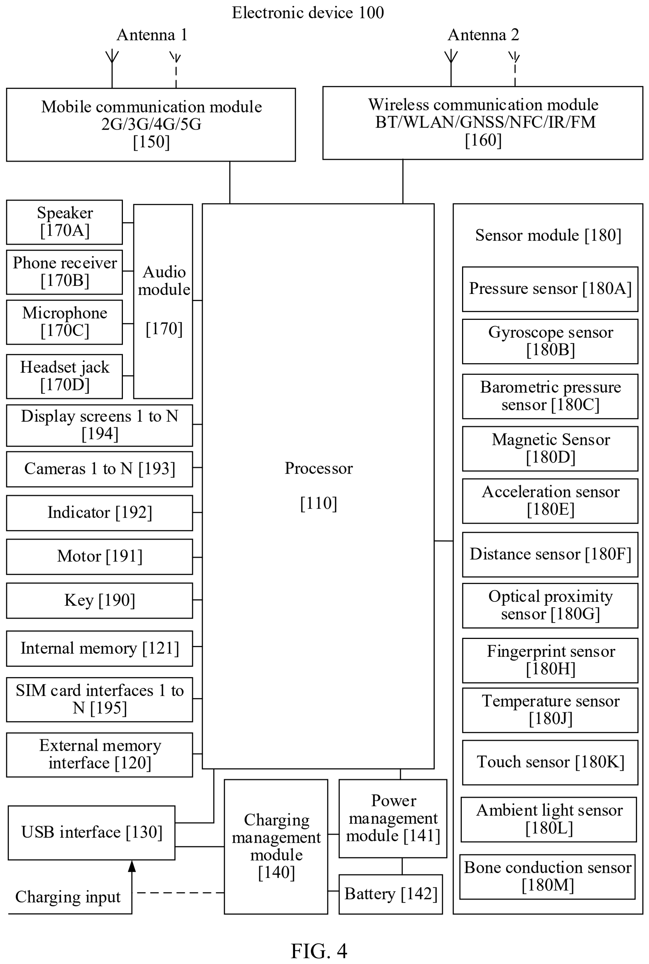

FIG. 4 is a schematic structural diagram of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or components are arranged in different manners. The components in the figure may be implemented by hardware, software, or a combination of software and hardware.

In some embodiments, after the processor 110 starts an application, for example, a note application, and when the breath wakeup function is in an enabled state, if the processor 110 receives the first operation, for example, tapping a note title or tapping a function key for creating a new note, an input interface corresponding to the note application is displayed in a display screen 194, and the input box is displayed in the input interface. Corresponding to a pop-up input box, the processor 110 sets an input method application to which the input box in the note application belongs to a highest priority for breath wakeup. When the processor 110 receives a second operation, for example, picking up the electronic device to 5 cm from the mouth and speaking, the processor 110 obtains a voice inputted by the user, converts a voice flow corresponding to the voice into text, and displays the text in the input interface corresponding to the note application through the display screen 194.

The second operation may include: detecting that a location change of the electronic device satisfies a preset condition and detecting voice breath of the user. For example, the operation may be an operation that the user picks up the mobile phone, moves it close to the mouth, and speaks. For an action of the user picking up the mobile phone, data such as a movement acceleration of the electronic device 100 can be detected through the acceleration sensor 180E and data such as a rotation angle of the electronic device can be detected through the gyroscope sensor 180B. When the data satisfies the preset condition, it can be determined that the user picks up the mobile phone. In some embodiments, for an action of moving close to the mouth, a distance close to an object can be detected through the distance sensor 180. In some embodiments, operations of the user picking up the mobile phone and moving close to the mouth may also be recognized through an action recognition model. For determining of a specific action, refer to a recognition method in the related art, and details are not described in this application again.

In some embodiments of this application, a moment at which the processor 110 controls the input box to pop up may be described in the foregoing note application. When receiving the first operation, the processor 110 directly displays the input interface in the display screen 194 and displays the input box. In some other embodiments, after opening an application, for example, opening a chat application, the processor 110 may control the display screen 194 to display the input interface (the input box is not popped up in this case), and control the input method application to pop up the input box in the input interface only when the user taps (the first operation) an edit box in the input interface. The processor 110 sets, in response to the display of the input box, the input method application to which the input box in an interface corresponding to the note application belongs to the highest priority for breath wakeup.

It may be understood that an interface connection relationship between modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of the interface connection manners.

The electronic device 100 implements a display function through a GPU, the display screen 194, an application processor, and the like. The GPU is a microprocessor for image processing, and is connected to the display screen 194 and the application processor. The GPU is configured to execute mathematical and geometric calculations, and is used for graphics rendering. The processor 110 may include one or more GPUs that execute program instructions to generate or change display information.

In an embodiment, the display screen 194 displays the input interface of the first application according to control instructions of the processor 110, displays an interface status during voice input, an interface including text information after the voice input, and the like, so that the user can see the text information converted from the voice input through the display screen.

The internal memory 121 may be configured to store computer-executable program code, and the executable program code includes instructions. The internal memory 121 may include a program storage region and a data storage region. The program storage region may store an operating system, an application needed by at least one function (for example, a chat application, an input method application, a note application, and an image play function), and the like. The data storage region may store data (for example, voice flow data and an address book) created during use of the electronic device 100, and the like. In addition, the internal memory 121 may include a high-speed random access memory, and may also include a non-volatile memory, for example, at least one magnetic disk memory, a flash memory device, or a universal flash storage (universal flash storage, UFS). The processor 110 runs the instructions stored in the internal memory 121, and/or the instructions stored in the memory disposed in the processor, to execute various function applications and data processing of the electronic device 100.

In an embodiment of this application, the internal memory 121 may store instructions of the voice-to-text conversion method. The processor 110 runs the instruction of the voice-to-text conversion method, so that the electronic device 100 converts the voice flow into the text after the user inputs the voice, and displays the text in the display screen 194.

The touch sensor 180K is also referred to as a "touch device". The touch sensor 180K may be disposed on the display screen 194. The touch sensor 180K and the display screen 194 form a touchscreen, which is also referred to as a "touch screen". The touch sensor 180K is configured to detect a touch operation performed on or near the touch sensor 180K, for example, a touch operation of tapping an edit box. The touch sensor may transfer the detected touch operation to the application processor, to determine a touch event type. A visual output related to the touch operation may be provided through the display screen 194. In some other embodiments, the touch sensor 180K may alternatively be disposed on a surface of the electronic device 100, and is located on a position different from that of the display screen 194.

In some embodiments, when the user touches the display screen 194 and the touch is considered as a specific operation like tapping, the processor 110 receives a specific operation of the user on the input panel (the input box) of the display screen 194, and controls the display screen 194 to display the input panel in response to the operation, so that the user can directly input text or input in the voice-to-text conversion manner.

The microphone 170C, also referred to as a "MIC" or a "mike", is configured to convert a sound signal into an electrical signal.

In some embodiments, the microphone 170C may obtain breath or voice information inputted by the user, convert sound signals into electrical signals, and transfer the electrical signals to the processor 110. The processor 110 further processes these electrical signals, and finally recognizes these electrical signals through the voice recognition technology to obtain corresponding text signals. In addition, these electrical signals are displayed in the display screen 194 in a form of text.

A software system of the electronic device 100 may use a layered architecture, an event-driven architecture, a microkernel architecture, a micro service architecture, or a cloud architecture. In this embodiment of the present invention, an Android system with a layered architecture is used as an example to illustrate a software structure of the electronic device 100.

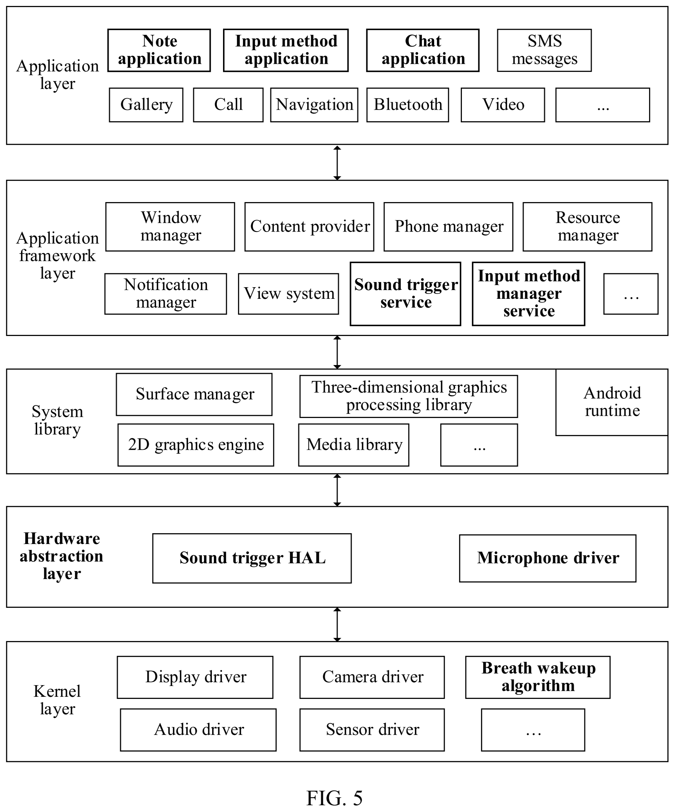

FIG. 5 is a block diagram of a software structure of an electronic device 100 according to an embodiment of the present invention.

In the layered architecture, software is divided into several layers, and each layer has a clear role and task. Layers communicate with each other through a software interface. In some embodiments, the Android system is divided into four layers, namely, an application layer, an application framework layer, an Android runtime (Android runtime) and system library (not shown in the figure), a hardware abstraction layer, and a kernel layer from top to bottom.

The application layer may include a series of application packages.

As shown in FIG. 5, the application package may include many applications, for example, applications such as a chat application, an input method application, and a note application. In addition, the application package may further include applications such as camera, photos, calendar, phone, maps, navigation, WLAN, Bluetooth, music, videos, and SMS messages.

The application framework layer provides an application programming interface (application programming interface, API) and a programming framework for the applications at the application layer. The application framework layer includes some predefined functions.

For example, the application framework layer may include a window manager, a content provider, a view system, a phone manager, a resource manager, a notification manager, and the like.

As shown in FIG. 5, the application framework layer may further include a sound trigger service and an input method manager service.

The input method manager service (Input Method Manager Service, IMMS) is configured to receive a message sent by the application layer, for example, a message sent by the input method application for enabling the breath wakeup function, or a message of voice input corresponding to a specific application.

In some embodiments, the input method manager service receives the message of enabling the breath wakeup function for voice-to-text conversion, stores the enabled state, and notifies the sound trigger service to be ready to start opening a voice channel.

In some other embodiments, the input method manager service receives an operation indicating that the user intends to input the voice, for example, an operation that the user taps the edit box. A corresponding input method application pops up an input method panel in a corresponding interface in response to a tapping operation of the user. The input method manager service obtains an event that the input method panel is popped up, and gets prepared for receiving a voice message by the input method application, for example, receiving a registration wakeup message, or registering a callback event for the input method application. In addition, the input method manager service further sets a higher wakeup priority for the input method application, for example, sets a priority at which the current input method application receives the voice to a priority higher than YOYO. In addition, when the input panel is closed, the input method manager service may further remove a priority for receiving the registration wakeup message and restore a priority in an original list, for example, restore a priority of YOYO.

In some embodiments, the input method manager service may further manage the registration list. For example, the registration list is sorted in a queue based on priorities, or a highest priority is marked as 1, and a second highest priority is marked as 2 in the list. In addition, when voice input is not needed, an original priority of the registration list is restored.

As shown in FIG. 5, the sound trigger service (Sound Trigger) (sound trigger and scene decision-making) is used for receiving a voice-related message sent by the input method manager service, and further notifying the hardware abstraction layer and the kernel layer, so that the electronic device always maintains a state in which a voice flow can be received.

In some embodiments, the sound trigger service may further receive an electrical signal corresponding to a voice message transmitted from a bottom layer, and determine, based on priority information registered by the input method manager service, to send the electrical signal corresponding to the voice message to a corresponding application. In this sending process, sending may be directly performed by the sound trigger service to an application corresponding to the application layer, for example, the input method application or the chat application. Alternatively, the electrical signal corresponding to the voice message may be sent to the input method manager service, and the input method manager service sends the electrical signal to an application in the application layer based on the priority recorded in a registry.

In some embodiments, the sound trigger service may further manage, for example, view, register, or modify, a priority of the application that sends the message.

In some embodiments, when the electronic device receives an operation of voice input used by the user, for example, the user raises the mobile phone and puts the mobile phone close to the mouth to start speaking, and after the action is recognized and confirmed by the breath wakeup algorithm, the electronic device obtains a voice flow of the user, sequentially notifies an upper layer of an HAL layer, and transfers related information such as a session address (session Id) and a buffer size (buffer Size) corresponding to the voice flow to the sound trigger service. The sound trigger service sends, based on a priority of a corresponding application registered by the input method manager service, the related information such as session Id and buffer Size corresponding to the corresponding voice flow to the chat application. The chat application converts the voice flow into the text information, and displays the text information on the display screen, thereby implementing a process of text conversion by the user through voice input.

As shown in FIG. 5, the hardware abstraction layer (Hardware Abstraction Layer, HAL) is located at an interface layer between an operating system kernel and a hardware circuit, and aims to abstract hardware.

In some embodiments, the hardware abstraction layer includes a voice trigger driver and a microphone driver. The voice trigger driver may trigger the breath wakeup algorithm of the kernel layer to keep prepared for receiving. The microphone driver may drive a hardware microphone to work, and obtain the voice of the user. For example, the microphone driver may drive the hardware microphone (micphone) to turn on when receiving a preparation for receiving a voice flow sent from the application framework layer, convert an audio signal of the voice into the electrical signal when the user inputs the voice, and further recognize specific content of the voice flow by using the breath wakeup algorithm of the kernel layer.

As shown in FIG. 5, the kernel layer is a layer between hardware and software. The kernel layer may include at least a display driver, a camera driver, an audio driver, a sensor driver, and the like. The kernel layer may further include the breath wakeup algorithm. The breath wakeup algorithm may perform voice recognition on the voice obtained by the microphone, may also perform recognition on a user action, and so on. For example, the breath wakeup algorithm may include an action recognition module and a breath recognition module. The action recognition module is configured to recognize the user action. Data of the user action may be obtained through a sensor, and sent to the breath wakeup algorithm. The breath recognition module is configured to recognize the breath of the user when the user speaks, and data corresponding to the breath may be inputted through the microphone. Then, the breath wakeup algorithm continuously obtains the voice flow, and separately uploads the voice flow to the hardware abstraction layer, finally transmits the voice flow to the application layer, so that an application corresponding to the application layer can obtain the voice flow, convert the voice flow into text, and display the text on the display screen.

In some embodiments of this application, the action recognition module and the breath recognition module of the breath wakeup algorithm may be integrated together, or may be two separate modules. This is not limited in this application.

A data flow of a voice-to-text conversion method is further described below with reference to the software framework layer shown in FIG. 5.

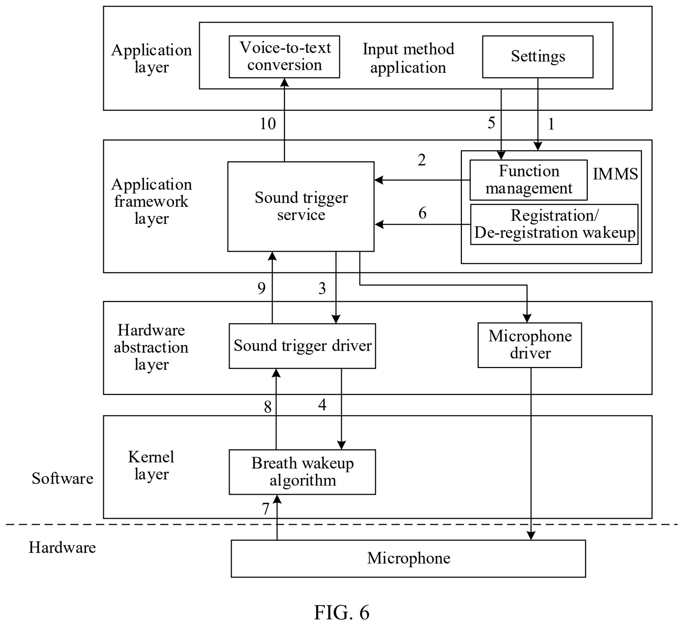

FIG. 6 is a schematic diagram of a data flow direction of a voice-to-text conversion method in a software framework of an electronic device according to an embodiment of this application. As shown in FIG. 6, the electronic device includes two parts: hardware and software. The software part includes an application layer, an application framework layer, a hardware abstraction layer, and a kernel layer.

As shown in FIG. 6, the application layer includes an input method application. The application framework layer includes an input method manager service IMMS as well as sound trigger and scene strategies (a sound trigger service for short). The hardware abstraction layer includes a sound trigger driver and a microphone driver. The kernel layer includes a breath wakeup algorithm.

The data flow direction of the voice-to-text conversion method is described below from three parts: turning on the breath wakeup algorithm, setting an application priority, and voice input.

First part: A process of turning on the breath wakeup algorithm is first described.

Before the user inputs a voice, the breath wakeup algorithm needs to be turned on. As shown in FIG. 6, for the process of turning on the breath wakeup algorithm, reference may be made to data flow directions of step 1, step 2, step 3, and step 4 in FIG. 6. In embodiments of this application, the user may enable a breath wakeup voice-to-text conversion function (turn on the breath wakeup algorithm) under a setting interface of the input method application through a setting function in the input method application. For example, corresponding to step 1 in FIG. 6, the user enables the breath wakeup function through settings in the input method application. For example, after a function key for enabling the breath wakeup function is tapped, a setting module sends a corresponding notification of turning on the breath wakeup algorithm to the IMMS. Step 2: The IMMS receives the notification of turning on the breath wakeup algorithm, manages the notification, records and saves the notification, and notifies the sound trigger service to be ready to start opening a breath wakeup algorithm channel. Step 3: The sound trigger service notifies a sound trigger driver of a hardware abstraction layer to open the breath wakeup algorithm channel. Step 4: The breath wakeup algorithm is turned on, and is used to recognize breath, so as to be awoken.

In addition, the sound trigger service may further notify the microphone driver to start the microphone, so that the microphone receives the breath and the voice of the user at any time. In some embodiments, the voice trigger driver may also notify the microphone driver to start the microphone. Alternatively, the voice trigger driver includes the microphone driver, and the microphone is directly driven to work. This is not limited in this application.

Step 1 to step 4 are a data flow process when the breath wakeup algorithm is turned on. This process may be that when the user uses the electronic device for the first time, the breath wakeup function is enabled through settings in the application. Alternatively, this process may be that when voice-to-text conversion is needed, the breath wakeup function is enabled through settings in a corresponding input method application.

Second part: Setting the application priority is described. For this process, reference may be made to step 5 and step 6 in FIG. 6.

As shown in FIG. 6, a note application is used as an example, and when the user opens the note application and taps a new note (shown as FIG. 3B(1)) in a note interface, an input interface is displayed. In this case, the input method application obtains a tapping event and pulls up an input panel (an input box) in the input interface. Step 5: The input method application pulls up the input panel (pops up the input panel) to implement related input. The IMMS may sense that the input panel is pulled up, and obtain an identifier of the note application. Step 6: The IMMS makes a preparation for receiving a registration wakeup message based on the identifier of the note application. For example, the IMMS records the identifier of the note application in the registration list, marks the identifier to record 1 in a corresponding list, to use the identifier as a highest priority of using the breath wakeup algorithm, and records an identifier of an application not having a highest priority as 0 in a corresponding list, to distinguish an application corresponding to the highest priority from an application not having the highest priority, so that after the user inputs the voice, the voice message may be sent to an input method application to which the note application belongs.

Third part: A process of voice input is described. For this process, reference may be made to step 7 to step 11 shown in FIG. 6.

As shown in FIG. 6, after the electronic device turns on the foregoing breath wakeup algorithm and sets the application priority, if the user executes the second operation, for example, picks up the mobile phone, moves it close to the mouth, and speaks, the electronic device execute step 7, that is, continuously receives the voice of the user, and obtains the voice flow. Step 8: The breath wakeup algorithm notifies the sound trigger driver to send event information related to the voice flow, such as session Id/buffer Size, to the sound trigger service. Step 9: The sound trigger driver transfers the event information related to the voice flow to the sound trigger service (Sound Trigger), and the sound trigger service queries a current event receiving registration list to determine whether to send a breath wakeup event to a registrant (a chat application) with the highest priority. Step 10: The event is sent to the input method application, so that the input method application further converts the voice flow into text, and displays the text in a current chat application or note application.

In the foregoing process of implementing the voice input described in FIG. 6, analysis is performed from a perspective of the user. The user only needs to tap the input interface, pick up the mobile phone, and speak, to implement voice-to-text conversion on a used application. An operation conforms to a common operation habit, and an action is smooth, which improves user experience.

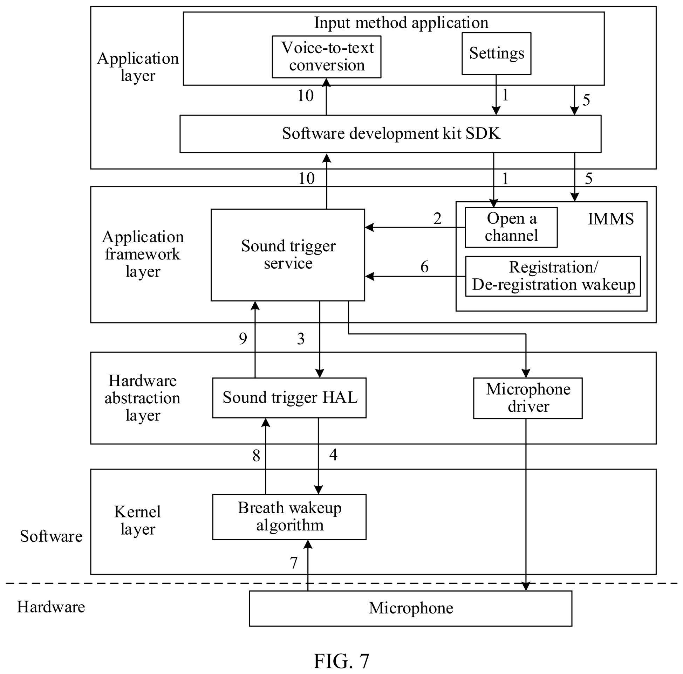

FIG. 7 is a schematic diagram of a data flow direction of a voice-to-text conversion method in a software framework of an electronic device according to another embodiment of this application. As shown in FIG. 7, the Android system is further divided into layers that are respectively an application layer, an application framework layer, an Android runtime (Android runtime) and system library (not shown in the figure), a hardware abstraction layer, and a kernel layer from top to bottom.

As shown in FIG. 7, an application package may include many applications, for example, applications such as a chat application and an input method application.

It should be noted that a difference between FIG. 7 and FIG. 6 lies in that when the input method application in the application package transfers information, the information is transferred through a public interface such as a software development kit (Software Development Kit, SDK). Then, the software development kit interface transmits the information to the application framework layer or each application in the application layer. In this way, the application framework layer can receive settings from any application in the application layer, and the framework layer does not need to be adapted to each application, thereby reducing adaptation difficulty of a third-party application.

As shown in FIG. 7, steps other than step 1, step 5, and step 10 are all the same as corresponding steps in FIG. 6.

For step 1, as shown in FIG. 7, the user enables the breath wakeup function based on the setting function of the input method application, and the setting module invokes the SDK interface, to send a channel for enabling the breath wakeup function to the IMMS through the SDK interface.

For step 5, after the input method application pops up the input method panel based on a notification of the note application, the identifier of the note application and a notification of preparing for voice input are sent to the SDK interface, and then the SDK interface notifies the IMMS to prepare for voice input.

In some embodiments, it can also be that the IMMS directly perceives popping up of the input panel, and then prepares for voice input.

For step 10, a sound trigger service module directly sends an event corresponding to the voice flow to the SDK interface, the SDK interface notifies a corresponding input method application, and the input method application converts the voice into text.

For step 2 to step 4 in a process of turning on the breath wakeup algorithm, step 6 in a process of setting the application priority, and step 7 to step 9 in a corresponding process of voice input, data flow directions of these steps are the same as those in FIG. 6, and details are not described herein again.

In a process in which the application layer communicates with the application framework layer shown in FIG. 7, the SDK interface is used for unified communication. The SDK interface is used as an interface for communication between the application layer and the application framework layer, and facilitates communication between all applications on the application layer and the framework layer, to implement the voice-to-text conversion method in embodiments of this application. From a perspective of technical development, adaption difficulty of the third-party application is reduced.

The following describes the voice-to-text conversion method provided in embodiments of this application in detail by using a mobile phone as an example. A plurality of applications are installed in the mobile phone. The voice-to-text conversion method provided in embodiments of this application may be applied to an electronic device having a hardware structure shown in FIG. 4 and a software structure shown in FIG. 5 to FIG. 7. Alternatively, the method may be applied to an electronic device having similar hardware structure and software structure in which, for example, there are more or fewer components than those shown in the figure, or some components are combined, or some components are split, or components are arranged in different manners.

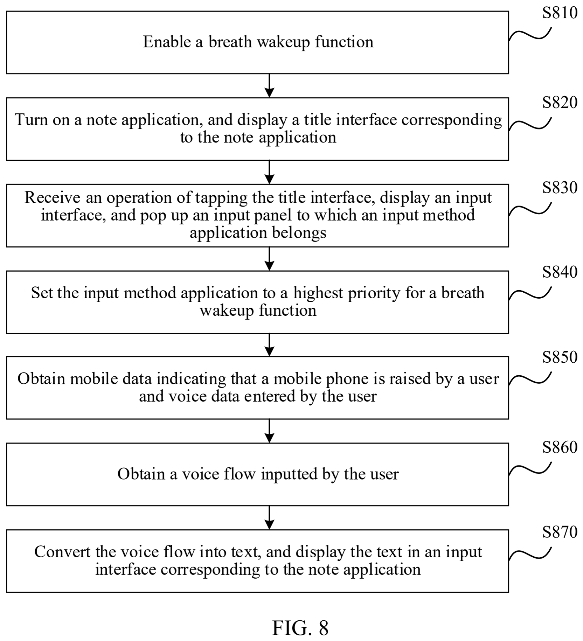

FIG. 8 is a flowchart of a voice-to-text conversion method according to an embodiment of this application. As shown in FIG. 8, the method may be executed by a mobile phone, and includes S810 to S880.

S810: Enable a breath wakeup function.

In this embodiment of this application, an operation occasion corresponding to enabling the breath wakeup function may be before that corresponding to inputting a voice by the user. For example, the breath wakeup function may be enabled when the mobile phone is used for a first time, or the function may be enabled when the user intends to use voice-to-text conversion.

In this embodiment of this application, when opening the application for the first time, the user may enable the breath wakeup function through an automatically popped-up guidance box. Details are as shown in FIG. 3A(1) and FIG. 3A(2) for an interface operation and corresponding descriptions, which are not described in detail herein again.

In some embodiments, the user may also find, through settings in the input method application, an interface for enabling the breath wakeup function.

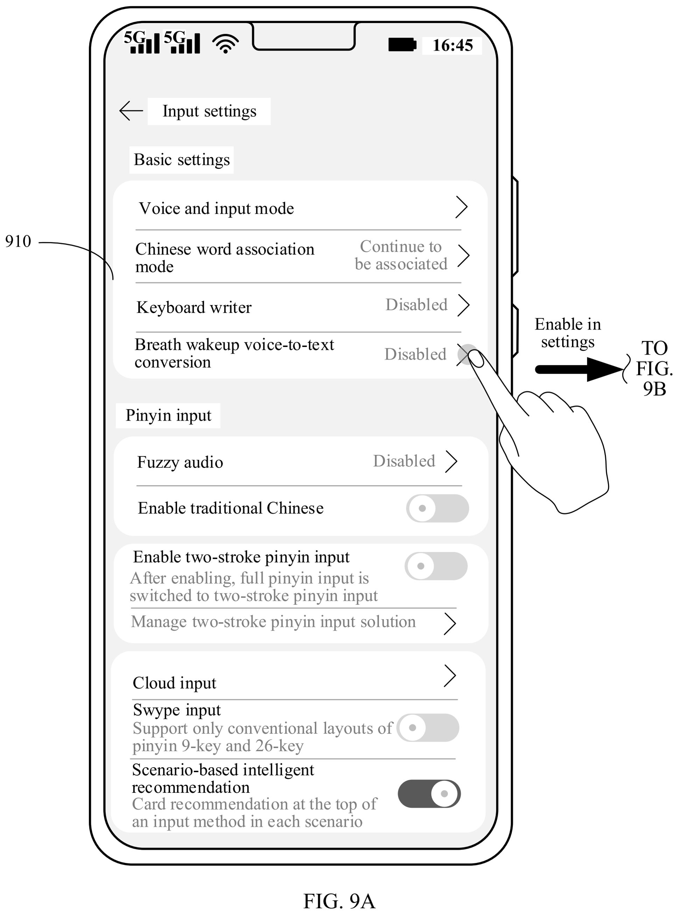

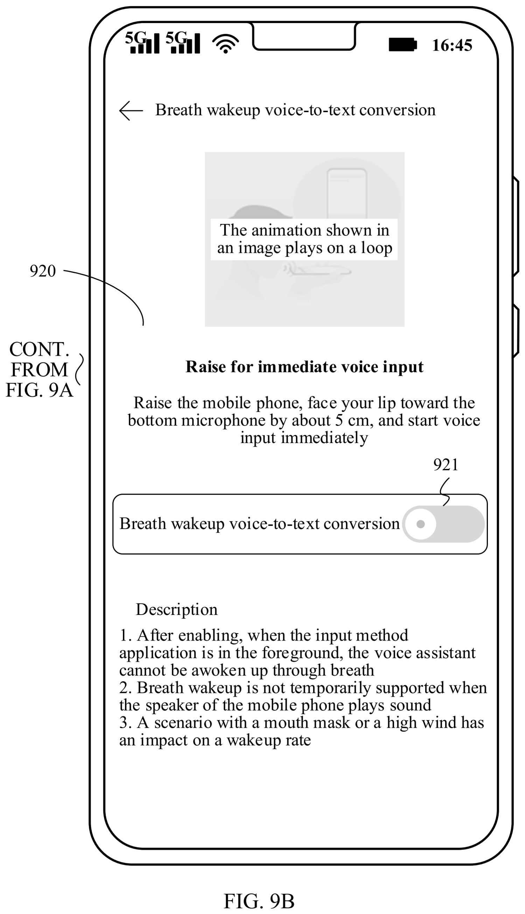

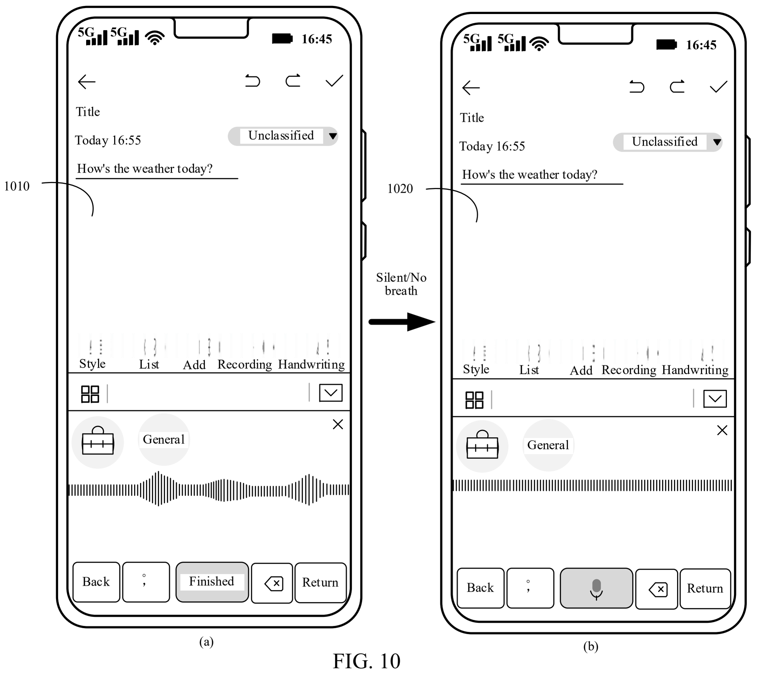

FIG. 9 A and FIG. 9B are diagrams of an operation interface for enabling a breath wakeup function through settings according to an embodiment of this application. For an interface 910 shown in FIG. 9A, a process of obtaining the interface of input settings may be obtained through "settings-more settings-input settings" in the input method application. In some embodiments, the input settings may also be found through settings in the note application. The interface 910 includes a "breath wakeup voice-to-text conversion" function. The user taps a corresponding identifier to display a breath wakeup voice-to-text conversion interface 920 shown in (b) in FIG. 10 (corresponding to FIG. 3A(2)). The user may enable or disable the breath wakeup voice-to-text conversion function through an enabler 921.

It should be noted that, for a bottom-layer data flow corresponding to enabling the breath wakeup function, reference may be made to descriptions of step 1 to step 4 of enabling the breath wakeup function in FIG. 6 and FIG. 7, and details are not described herein again.

The following describes step S820 to step S880 with reference to FIG. 3B(1), FIG. 3B(2), FIG. 3B(3), and FIG. 3B(4), a diagram of an operation interface of a mobile phone, and FIG. 8.

S820: Open a note application, and display a title interface corresponding to the note application. For the title interface, reference may be made to an interface 310 corresponding to FIG. 3B(1).

In some embodiments of this application, exemplary descriptions in which the note application is used as a first application are provided. In some embodiments, the first application may alternatively be an application like a chat application or a log book. These applications have an input function, and can display an input interface. The user can edit or input content that the user intends to express or exchange on the input interface. In the input interface, the user may implement an interaction process through voice input, text input, voice-to-text conversion input, or the like.

S830: Receive an operation (corresponding to a first operation) of tapping a title interface, display the input interface, and pop up an input panel (an input box) to which an input method application belongs.

For this step, reference may be made to an operation that the user taps a function key for creating a new note corresponding to FIG. 3B(1). After the user taps the function key 331 for creating a new note, the note application invokes the input method application, to display an input panel 341 (an input box) to which the input method application belongs in an input interface 340 shown in FIG. 3B(2). In this case, the mobile phone enters a state in which editing can be performed at any time.

S840: Set the input method application to a highest priority of user breath wakeup.

It should be noted that the breath wakeup function may be applied to different applications, for example, may further be applied to a voice assistant (a third application). When the input method application is not set for the priority, the voice assistant may preferentially use the breath wakeup function by default. In this way, the input method application cannot normally preferentially use the breath wakeup function. Therefore, in embodiments of this application, when the mobile phone determines that the user needs to perform voice input for the input method application, the priority of the input method application is set to the highest priority, so that the input method application can use the breath wakeup function. The highest priority may be, for example, recorded in a form of an excel table. That is, an input method application name is recorded in a table, and 1 is recorded in a corresponding position. 1 is used to represent the highest priority. 0 is recorded in positions corresponding to other applications, and 0 represents that these applications cannot use the breath wakeup algorithm currently. In addition, recording may also be performed through a queue, the input method application is ranked at the top of the queue, and only the application at the top may use the breath wakeup algorithm. Through this setting, when the user inputs the voice, the voice flow obtained by the breath wakeup function is sent to the input method application based on the highest priority. The input method completes voice-to-text conversion, and finally the text is smoothly displayed in the input interface in which the input method application is located.

In embodiments of this application, a processor of the mobile phone may write information such as a name and a unique ID of the identifier of the input method application into the registry, and set the priority of the input method application to the highest priority. Alternatively, an original priority identifier of a default application is removed, and the input method application is marked with a priority identifier, for example, a number 1. An implementation form of setting the priority is not limited in embodiments of this application.

In some embodiments, S840 may further include receiving a registration of a callback event of the breath wakeup function corresponding to the input method application, so that a callback interface of the input method application continuously monitors a received voice flow, and the input method application obtains the voice flow. A corresponding priority is a callback priority, that is, the callback interface of the input method application first obtains the voice flow.

In addition, reference may be made to descriptions of step 5 and step 6 shown in FIG. 6 and FIG. 7 for a bottom-layer data flow direction implemented in step S830 to step S840, and details are not described herein again.

S850: Obtain mobile data indicating that a mobile phone is raised by a user and voice data entered by the user. For interface operations of the mobile phone corresponding to this step, reference may be made to an interface 340 shown in FIG. 3B(2) to an interface 350 shown in FIG. 3B(3). A corresponding action is that the user raises the mobile phone and speaks, and the action conforms to a habit of commonly using the mobile phone by the user, so that the user feels more natural.

In embodiments of this application, raising the mobile phone by the user is taken as a former action, and breath is taken as a latter action. Such an operation better conforms to an operation habit of the user picking up the mobile phone to speak.

It should be noted that, in some embodiments, another action may also be used, for example, the mobile phone moves at a transverse acceleration, or it is recognized that the mobile phone moves at a constant speed but a rotation angle reaches a preset 90 degrees. A specific implementation of the action is not limited in embodiments of this application.

As an operation when the user intends to input the voice, for example, the user picks up the mobile phone, moves it close to the lips by a set distance, like 5 cm, and inputs the voice. The mobile phone may obtain the mobile data through the sensor. For example, the acceleration sensor obtains that a movement acceleration of the mobile phone reaches 50 m/s2, and the distance sensor detects that a distance close to an object reaches 5 cm. The microphone receives the breath, the voice signal, or the like. After these data are satisfied, and when the user inputs the voice, the mobile phone may directly obtain the voice flow of the user. In embodiments of this application, the mobile phone may be based on the action recognition model. The action recognition model is obtained through continuous training, and can accurately recognize, based on mobile data and distance data obtained by the sensor, whether the user needs the input of voice-to-text conversion. For a specific recognition method, reference may be made to the related art, and details are not described in this application again. This operation is simple, natural and smooth for the user, and is convenient for operating with one hand.

In embodiments of this application, an example in which a distance between the microphone of the mobile phone and the lips is set to be within 5 cm is used for description, and in some embodiments, the distance may alternatively be within 8 cm, or 10 cm. This is not limited in this application.

S860: Obtain a voice flow continuously inputted by the user.

In embodiments of this application, the mobile phone obtains the voice inputted by the user through the microphone, and displays, on an interface of the mobile phone, an audio amplitude of the voice flow being inputted, so that the user can learn that a current voice input is valid.

As shown in FIG. 3B(3), when the user raises the mobile phone and moves it close to the mouth to speak, the breath wakeup function obtains a corresponding voice flow through the breath wakeup algorithm, and displays the voice flow in the interface 350 of the mobile phone through the audio amplitude, so that the user more intuitively observes that voice input is being performed.

For voice flow obtaining and a bottom-layer data flow transmitted to the input method application, reference may be made to descriptions of step 7 to step 10 in FIG. 6 and FIG. 7, and details are not described herein again.

S870: Convert the voice flow into text, and display the text in an input interface corresponding to the note application.

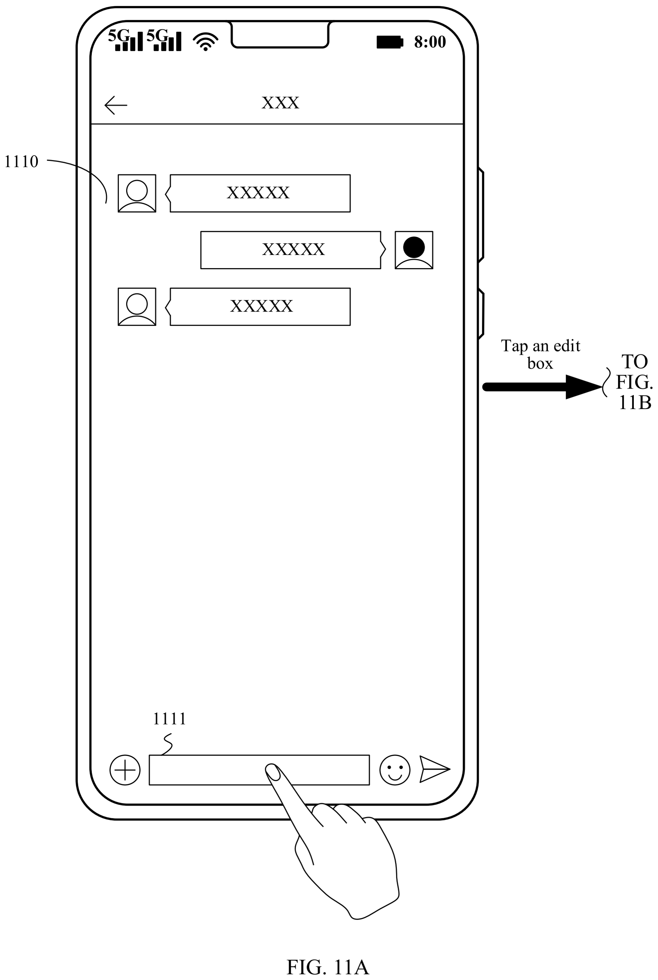

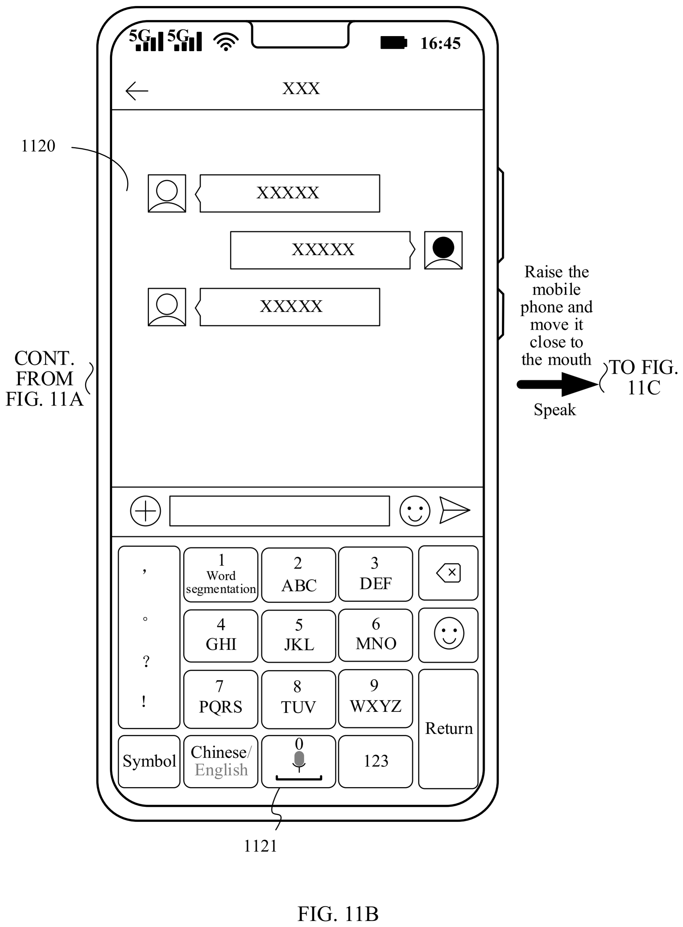

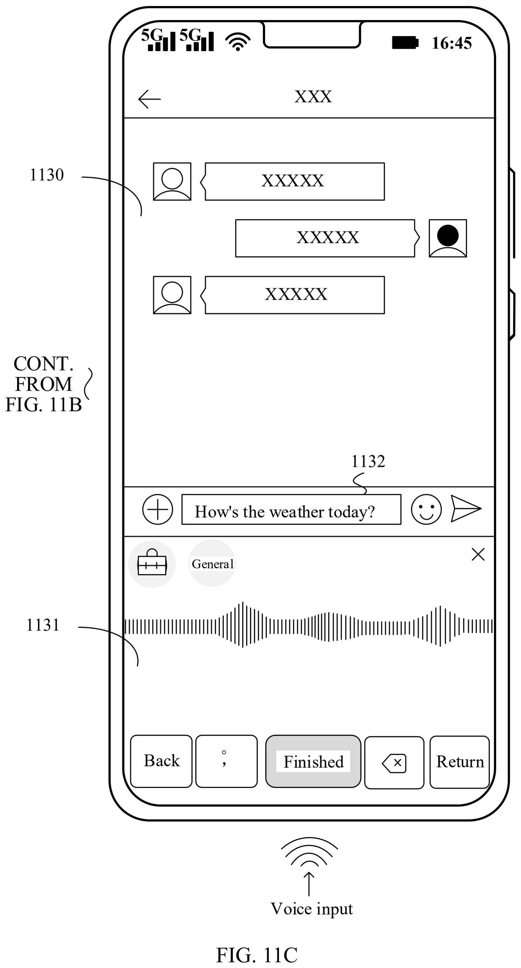

As shown in (d) in FIG. 11A, FIG. 11B, and FIG. 11C, in an interface 1140, a corresponding voice flow is converted into text "How's the weather today?" The user may directly obtain text information in the interface 1140.

In the foregoing operation process, for the user, in a process of voice input, only a common tapping on the edit box and raising the mobile phone and moving it close to the mouth to speak need to be performed to implement voice-to-text conversion. An entire operation process does not need an operation performed by the user, for example, long-pressing the control or tapping a voice input function key when inputting the voice. The operation is simple, natural, and smooth, provides convenience to a scenario of a one-hand operation, which improves user experience.

In some embodiments of this application, the mobile phone may execute an operation manner shown in FIG. 8 to complete the input of voice-to-text conversion, and may choose to use an existing conventional operation manner. For example, a control 11 shown in FIG. 3B(2) is long-pressed to perform voice input. In an actual use process, the user not only can use the voice-to-text conversion method in embodiments of this application, but also can use an existing voice input key to complete voice input, so that the user can flexibly select according to requirements, and have better experience.

In some embodiments of this application, an interface 350 shown in FIG. 3B(3) and an interface 360 shown in FIG. 3B(4). After a current voice flow ends for more than preset duration, for example, there is no voice input for three seconds (a third operation). In this case, the mobile phone may determine that the voice input ends, and a position at which an audio amplitude 351 corresponding to the voice is located is restored to an original letter or symbol interface 361 of the input panel. This allows the user to enter a next voice input at any time or select handwriting input, so that the user can switch an input mode.

In some embodiments, instant voice-to-text conversion may also be performed. That is, when the user inputs the voice, the mobile phone directly converts the voice into text, and does not need to determine that the voice flow ends.

In some embodiments, when the user taps a function key for ending the voice on the interface of the input method application (a third operation), for example, a control 11 shown in FIG. 3B(3), the control 11 displays "Finished", to prompt the user that the voice input ends. The user may tap the control 11 to represent that the current voice input ends.

In some embodiments, when the user does not end the voice input, for example, the voice does not reach the preset duration of three seconds, the interface of the mobile phone may remain in a state of audio input with a note. FIG. 10 is a schematic diagram of an interface during voice input according to an embodiment of this application. As shown in (a) in FIG. 10, an interface 1010 is used when the user is inputting the voice, and an amplitude of audio in the interface 1010 is large. When the user is silent, in this case, an interface 1020 shown in (b) of FIG. 10 is used, an amplitude of audio in the interface 1020 is small, or an amplitude is uniform.

In the foregoing embodiment, an example in which the user uses the note application is used for description. In some embodiments, when the user uses another application, for example, the chat application, conditions for triggering the display of the input box are different.

FIG. 11A, FIG. 11B, and FIG. 11C are schematic diagrams of an operation interface corresponding to opening a chat application in a mobile phone according to an embodiment of this application. As shown in FIG. 11A, FIG. 11B, and FIG. 11C, after the user opens the chat application, an input interface 1110 is displayed. In this case, the input box is not displayed or popped up. When the user taps the edit box 1111, an interface 1120 shown in FIG. 11B is displayed, and an input panel 1121 (an input box) is popped up or displayed in the interface 1120. That is, the input panel may be opened together with the input interface, or may be opened after the input interface is displayed. This is not limited in this application. Then, the user raises the mobile phone, moves it close to the mouth, and speaks. The mobile phone displays an interface 1130 shown in FIG. 11C. An audio amplitude is displayed in an input panel 1131, and text after voice-to-text conversion, such as "How's the weather today?", is displayed on an information input field 1132.

Descriptions are provided below with reference to an interaction process between modules of executing the voice-to-text conversion method by the mobile phone.

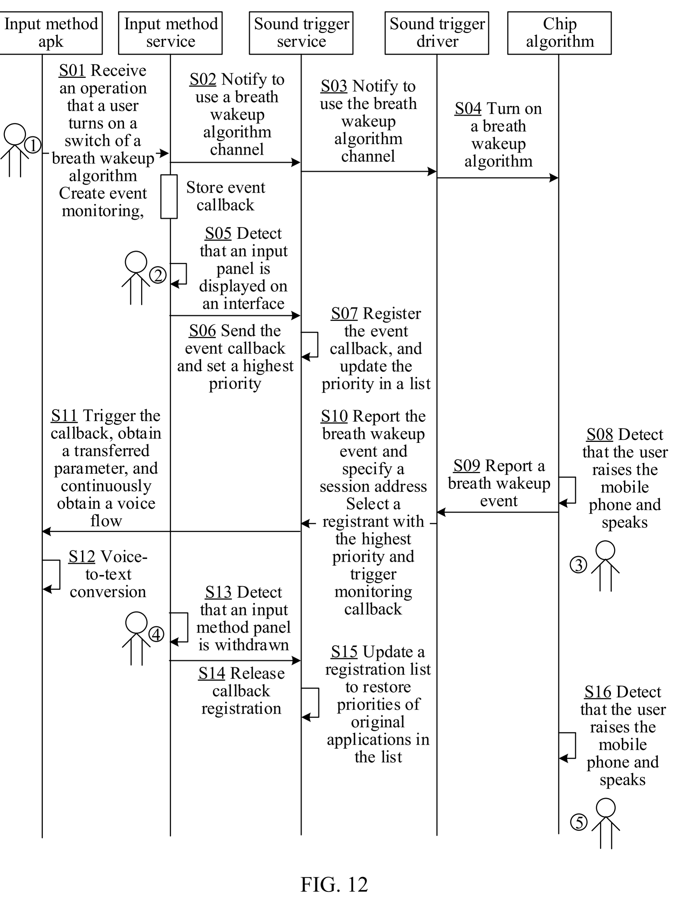

FIG. 12 is a flowchart of interaction between modules of executing a voice-to-text conversion method in a mobile phone according to an embodiment of this application. The mobile phone may include the hardware structure shown in FIG. 4, or may include the software architecture shown in FIG. 5 to FIG. 7. As shown in FIG. 12, the mobile phone includes software modules such as an input method apk, an input method service, a sound trigger service, a sound trigger driver, and a chip algorithm. The input method apk corresponds to the input method application in the application layer shown in FIG. 5, the input method service and the sound trigger service are located at the application framework layer shown in FIG. 5, the sound trigger driver is located at the hardware abstraction layer shown in FIG. 5, and the chip algorithm corresponds to the breath wakeup algorithm in the kernel layer shown in FIG. 5.

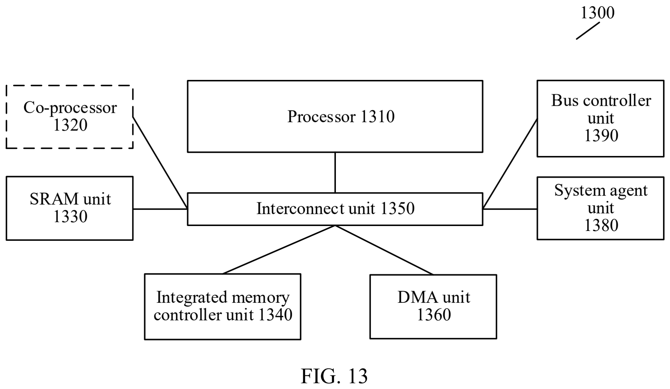

As shown in FIG. 12, in terms of operations of the user, and a process of processing data by the modules based on the operations is divided into four parts, which respectively correspond to four parts 1, 2, 3, and 4 shown in FIG. 13.
1: It is a process of turning on a breath wakeup algorithm, including S01 to S04. For data flow directions of these steps, reference may be made to the descriptions of step 1, step 2, step 3, and step 4 in FIG. 6 or FIG. 7.

S01: An input method apk receives an operation that a user turns on a switch of a breath wakeup algorithm, and creates an event callback.

As an independent module, the input method apk may obtain information from settings, for example, obtain the switch for turning on the breath wakeup. The input method apk creates an event callback interface based on the turn-on operation, to obtain a voice flow of a voice.

The input method apk notifies an event of turning on the breath wakeup switch to an input method service.

S02: An input method service notifies a sound trigger service to use a breath wakeup algorithm channel, and stores the event callback.

After the event callback is stored and after the input method service obtains that the input panel is displayed in an interface, the sound trigger service is notified, and the highest priority is set for the event callback, so that the input method apk can prepare to obtain the voice flow at any time.

S03: A sound trigger service notifies a sound trigger driver to use the breath wakeup algorithm channel.

For example, the sound trigger service sends a signal of turning on the breath wakeup algorithm channel to the sound trigger driver, so that the sound trigger driver notifies a next level of using the breath wakeup algorithm channel.

S04: A sound trigger driver notifies a chip algorithm to turn on a breath wakeup algorithm.

In embodiments of this application, after the breath wakeup algorithm is turned on, when the user does not turn off an enabler of the algorithm and the mobile phone is normally turned on, the breath wakeup algorithm may remain in an on state all the time, and the user may use the breath wakeup algorithm on the mobile phone at any time.

S01 to S04 correspond to S810 in FIG. 8. For a specific explanation, reference may be made to the description in S810.

2: It is a process of setting an application priority, including S05 to S07. For data flow directions of these steps, reference may be made to descriptions of step 5 and step 6 in FIG. 6 or FIG. 7.

S05: The input method service detects that an input panel is displayed on an interface (a first operation).

In some embodiments of this application, after the user taps an edit field of the input interface, an input panel is popped up, to trigger the input method service to execute S06.

S06: The input method service sends the event callback to the sound trigger service, and sets a highest priority.

Setting the highest priority indicates that the user currently having the highest priority is the input method APK. When there is a voice input, a voice message is preferentially sent to the input method APK.

S07: The sound trigger service registers the event callback, and updates the priority in a list.

In some embodiments, the highest priority may be determined in a form of a queue. For example, a callback (an input method APK) that is most preferentially processed is placed at an uppermost position of the queue. Each time the voice flow is obtained, the voice flow is preferentially sent to the callback at the uppermost of the list. In some embodiments, an identifier of the callback may also be marked. For example, a user marked as 1 preferentially uses the chip algorithm. A manner of implementing the priority is not limited in this application.

S05 to S07 are corresponding to S830 and S840 in FIG. 8. For a specific explanation, reference may be made to the descriptions in S830 and S840.

3: It is a process of voice input, including S08 to S12. For data flow directions of these steps, reference may be made to the descriptions of step 7 and step 11 in FIG. 6 or FIG. 7.

S08: A chip algorithm recognizes that the user raises the mobile phone and speaks.

In embodiments of this application, the chip algorithm may be integrated into two modules, that is, the action recognition module and the breath recognition module. When the user raises the mobile phone, the acceleration sensor of the mobile phone may obtain data of an acceleration of the mobile phone, and send the data to the action recognition module. The action recognition module recognizes a raising action of the user. In addition, after the action is recognized, the user speaks. In this case, the microphone obtains the voice or the breath of the user, converts the voice or the breath into an electrical signal corresponding to the breath, and forwards the electrical signal to the breath recognition module. The breath recognition module recognizes that the breath is inputted based on the electrical signal. Recognizing the raising and speaking triggers the chip algorithm to continuously obtain the voice flow.

In embodiments of this application, an example in which raising the mobile phone and speaking is used as a second operation is used for description. In some embodiments, another operation may also be used for description. For example, the user knocks the mobile phone twice, moves it close to the mouth, and speaks, or shakes the mobile phone three times, moves it close to the mouth, and speaks.

S09: The chip algorithm reports a breath wakeup event to the sound trigger driver.

S10: The sound trigger driver reports the breath wakeup event to the sound trigger service, specifies a session address, selects a registrant with the highest priority, and triggers callback. For example, the registrant with the highest priority is the input method apk, and triggers the callback interface of the input method apk.

S11: The sound trigger service triggers an input method APK callback, and transfers a parameter and a voice flow, to trigger the input method APK to call back the continuously-obtained voice flow.

S12: The input method APK is triggered to convert a voice corresponding to the voice flow into text. Then, the processor controls the display screen to display text content.

S08 to S12 are corresponding to S850 and S870 in FIG. 8. For a specific explanation, reference may be made to the descriptions in S850 and S870.

4: It is a process in which the user turns off the voice input, including S13 to S15.

S13: The input method service detects that an input method panel is withdrawn (a fourth operation).

S14: The input method service notifies the sound trigger service to release a callback registration.

S15: The sound trigger service updates a registration list to restore priorities of original applications in the list. That is, a priority of an application corresponding to the input method APK is cancelled, and a priority in an original registry is restored.

5: It is a process in which the user raises the mobile phone again to speak, including S16 as shown in FIG. 12.

S16: The chip algorithm detects again that the user raises the mobile phone and speaks.

For example, after the priority in the registration list is restored, a highest priority of a YOYO application is restored in the list. In this case, the chip algorithm forwards the obtained voice flow to the YOYO. In this way, different applications are seamlessly switched between each other according to requirements of the user without an additional operation of the user, thereby greatly improving experience.

In some embodiments of this application, when the user closes the input panel, so that the input panel is not in an interface in which the input method application currently runs (the third operation), it indicates that the user ends the voice-to-text conversion input for the current input method application. In this case, the processor of the mobile phone may cancel the highest priority for the breath wakeup function that corresponds to the input method application. For example, a callback priority of the highest priority corresponding to the input method application is deleted from the registration list, an original callback priority arrangement in the registration list is restored, and the voice flow is no longer preferentially sent to the input method application when being received.

In addition, it indicates that the user ends an operation of the voice-to-text conversion input for the current input method application. Alternatively, it may be that the user closes the input method application, or the input method application enters the background. In this case, the mobile phone cancels the priority of the input method application, and restores an original default priority of a system.

According to the voice-to-text conversion method in embodiments of this application, in a process of triggering voice-to-text conversion, the user can implement the voice input without a need to perform a fine operation such as long-pressing a voice input function key or tapping an interface button. The entire operation is natural and smooth, and is convenient for one-hand operation, which can greatly improve user experience.

This application further provides an electronic device, including:
a memory, configured to store instructions executed by one or more processors of a device; and
a processor, configured to execute the method explained with reference to FIG. 5 to FIG. 12 in the foregoing embodiments.

An embodiment of this application further provides a computer-readable storage medium, where the computer-readable storage medium stores a computer program, and when the computer program is run by a processor, the processor is enabled to execute the method explained in FIG. 5 to FIG. 12 in the foregoing embodiments.

This application further provides a computer program product including instructions. When the computer program product runs on an electronic device, a processor is enabled to execute the method explained in FIG. 5 to FIG. 12 in the foregoing embodiments.

FIG. 13 is a block diagram of a system on chip (System on Chip, SoC) 1300 according to an embodiment of this application. In FIG. 13, similar components have same reference numerals. In addition, a dashed box is an optional feature of a more advanced SoC. In FIG. 13, the SoC 1300 includes: an interconnect unit 1350 coupled to an application processor 1310; a system agent unit 1380; a bus controller unit 1390; an integrated memory controller unit 1340; one group of or one or more co-processors 1320, which may include integrated graphics logic, an image processor, an audio processor, and a video processor; a static random access memory (Static Random Access Memory, SRAM) unit 1330; and a direct memory access (DMA) unit 1360. In an embodiment, the co-processor 1320 includes a dedicated processor, for example, a network or a communication processor, a compression engine, a general purpose computing on GPU (General Purpose Computing on GPU, GPGPU), a high-throughput many integrated core (Many Integrated Core, MIC) processor, or an embedded processor.

The static random access memory (SRAM) unit 1330 may include one or more computer-readable media configured to store data and/or instructions. The computer-readable storage medium may store the instructions, and specifically, store temporary and permanent copies of the instructions. The instructions may include: When the instructions are executed by at least one unit in the processor, a Soc 1500 is enabled to execute the method according to the foregoing embodiments. For details, refer to the method explained in FIG. 5 to FIG. 12 in the foregoing embodiments, and details are not described herein again.

Embodiments of a mechanism disclosed in this application may be implemented in hardware, software, firmware, or a combination of these implementations. Embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to input instructions, to execute functions described in this application and generate output information. The output information may be applied to one or more output devices in a known manner. For objectives of this application, a processing system includes any system having a processor like a digital signal processor (Digital Signal Processor, DSP), a micro-controller, an application-specific integrated circuit (Application-Specific Integrated Circuit, ASIC), or a microprocessor.

The program code may be implemented by using a high-level programming language or an object-oriented programming language, to communicate with the processing system. When needed, the program code may also be implemented by using an assembly language or a machine language. In fact, the mechanism described in this application is not limited to the scope of any specific programming language. In any case, the language may be a compiled language or an interpreted language.

In some cases, the disclosed embodiments may be implemented in hardware, firmware, software, or any combination thereof. The disclosed embodiments may further be implemented as instructions carried by or stored on one or more transitory or non-transitory machine-readable (for example, computer-readable) storage media, and the instructions may be read and executed by one or more processors. For example, the instructions may be distributed by using a network or by using another computer-readable medium. Therefore, the machine-readable medium may include any mechanism configured to store or transmit information in a form readable by a machine (for example, a computer), including, but is not limited to, a floppy disk, an optical disc, an optical disk, a compact disc read-only memory (Compact Disc Read-Only Memory, CD-ROMs), a magneto-optical disk, a read-only memory (Read-Only Memory, ROM), a random access memory (RAM), an erasable programmable read-only memory (Erasable Programmable Read-Only Memory, EPROM), an electrically erasable programmable read-only memory (Electrically Erasable Programmable Read-Only Memory, EEPROM), a magnetic card or an optical card, a flash memory, or a tangible machine-readable memory configured to transmit information (for example, a carrier, an infrared signal, and a digital signal) by using the Internet in an electrical, optical, acoustic, or other forms of propagation signals. Therefore, the machine-readable medium includes any type of machine-readable medium suitable for storing or transmitting electronic instructions or information in a form readable by a machine (for example, a computer).

In the accompanying drawings, some structures or method features may be shown in a specific arrangement and/or order. However, it should be understood that such a specific arrangement and/or order may not be needed. Instead, in some embodiments, the features may be arranged in a manner and/or order different from that shown in the accompanying drawings of the specification. In addition, that a structure or method feature is included in a specific figure does not mean that the feature is needed in all embodiments, and in some embodiments, the feature may not be included or may be combined with other features.

It should be noted that units/modules mentioned in the device embodiments of this application are logical units/modules. In a physical manner, a logical unit/module may be a physical unit/module, or a part of a physical unit/module, or may be implemented by a combination of a plurality of physical units/modules. A physical implementation of these logical units/modules is not the most important, and a combination of functions implemented by these logical units/modules is the key to resolving the technical problem proposed in this application. In addition, to highlight innovation of this application, the foregoing device embodiments of this application do not introduce a unit/module that is not closely related to resolving the technical problem proposed in this application, which does not indicate that there is no other unit/module in the foregoing device embodiments.

It should be noted that, in examples and specification of this patent, relational terms such as first and second are merely used to distinguish one entity or operation from another entity or operation, but do not necessarily require or imply any such actual relationship or order between these entities or operations. Moreover, the terms "include," "comprise," or any variation thereof are intended to cover a nonexclusive inclusion. Therefore, a process, a method, an object, or a device that includes a series of elements not only includes those elements, but also includes other elements which are not clearly listed, or includes the inherent elements of the process, the method, the object, or the device. Without more limitations, an element defined by a phrase "including a/an" does not exclude that there is still another same element in the process, the method, the object, or the device that includes the element.

Although this application is shown and described with reference to some preferred embodiments of this application, a person of ordinary skill in the art should understand that various changes in forms and details may be made therein without departing from the spirit and scope of this application.

## Claims

1. A voice-to-text conversion method, applied to an electronic device, and the method comprising:
displaying an input box in a first interface of a first application in response to a first operation, wherein a breath wakeup function of the electronic device is in an enabled state;
in response to the display of the input box, setting a second application to which the input box belongs to have a highest priority for using the breath wakeup function, wherein the breath wakeup function triggers the second application with the highest priority to continuously receive voice data when a user moves the electronic device and receives breath of the user;
in response to that the user moves the electronic device and the breath of the user is detected, continuously receiving, by the second application of the electronic device, the voice data and converting the voice data to text; and
displaying, by the electronic device, the converted text in the first interface.

2. The method according to claim 1, wherein the first application is a note application, and the first operation is an operation of creating a new note or an editing operation acting on a note detail page.

3. The method according to claim 1, wherein the first application is an instant messaging application, and the first operation is an operation acting on a dialog interface of the instant messaging application.

4. The method according to any one of claims 1 to 3, wherein the in response to that the user moves the electronic device and the breath of the user is detected, continuously receiving, by the second application of the electronic device, the voice data and converting the voice data to text comprises:
when it is detected that movement acceleration of the electronic device reaches a preset value and the breath of the user is detected through the breath wakeup function, continuously receiving, by the second application of the electronic device, the voice data and converting the voice data into the text.

5. The method according to any one of claims 1 to 4, wherein the setting a second application to which the input box belongs to have a highest priority for using the breath wakeup function comprises:
registering a callback event of the second application for the breath wakeup function in a registration list, and setting a callback priority corresponding to the second application to the highest priority.

6. The method according to claim 4, wherein the method further comprises:
canceling, by the electronic device in response to a third operation, the highest priority of the second application for using the breath wakeup function, and no longer sending the voice data to the second application when receiving the voice data.

7. The method according to claim 6, wherein the third operation comprises:
an operation of closing the input box; or
an operation of quitting a running interface of the second application from the foreground.

8. The method according to claim 6, further comprising:
restoring the highest priority to the third application after canceling the highest priority of the second application for using the breath wakeup function; and
continuously receiving, by the third application of the electronic device, the voice data in response to that the user moves the electronic device and the breath of the user is detected.

9. The method according to claim 8, wherein the third application is a voice assistant application.

10. An electronic device, comprising:
a memory, configured to store instructions executed by one or more processors of a device; and
a processor, configured to execute the instructions, to enable the electronic device to execute the method according to any one of claims 1 to 9.

11. A computer-readable storage medium, wherein the computer-readable storage medium stores a computer program, and when the computer program is run by a processor, the processor is enabled to execute the method according to any one of claims 1 to 9.

12. A chip structure, comprising at least one chip, wherein the at least one chip is configured to execute the method according to any one of claims 1 to 9.

13. A computer program product comprising instructions, wherein when the computer program product runs on an electronic device, a processor is enabled to execute the method according to any one of claims 1 to 9.
